# EUROPÄISCHE PATENTSCHRIFT

(11) **EP 2 055 982 B1**
(45) Veröffentlichungstag und Bekanntmachung des Hinweises auf die Patenterteilung: **07.03.2012**
(21) Anmeldenummer: 08018350.2
(22) Anmeldetag: 21.10.2008
(51) Int. Cl.: F16D 66/02, F16D 66/00

(54) **Einrichtung zur Detektion eines maximal zulässigen Verschleißzustands von Bremsbelägen in Reibungsbremsen eines Schienenfahrzeugs**
Device to detect the maximum permitted wear status of brake covers in friction brakes on a railway vehicle
Dispositif destiné à la détection d'un état d'usure maximal autorisé de garnitures de frein dans des freins à friction d'un véhicule sur rail

(30) Priorität: 02.11.2007 DE 102007052285
(43) Veröffentlichungstag der Anmeldung: 06.05.2009
(73) Patentinhaber: KNORR-BREMSE Systeme für Schienenfahrzeuge GmbH, 80809 München (DE)
(72) Erfinder: Pitschneider, Karl, 85229 Markt Indersdorf (DE); Galander, Jens, 80997 München (DE)
(74) Vertreter: Mattusch, Gundula

(56) Entgegenhaltungen:
- DE-A1- 10 301 734
- JP-A- 10 009 310
- JP-A- 2004 286 087
- US-A- 4 117 451
- US-A- 4 334 428

## Beschreibung

### Stand der Technik

Die vorliegende Erfindung betrifft eine Einrichtung zur Detektion eines maximal zulässigen Verschleißszustands von Bremsbelägen in Reibungsbremsen eines Schienenfahrzeugs, gemäß dem Oberbegriff von Anspruch 1.

Eine solche Einrichtung dient dazu, die nahende Verschleißgrenze für den Belagverschleiß zu detektieren und mittels einer geeigneten Auswerte- und Anzeigeeinrichtung anzuzeigen. Damit wird dem Wartungspersonal die Möglichkeit gegeben, verschlissene Bremsbeläge durch neue Bremsbeläge zu ersetzen. Bei dieser Gelegenheit kann auch der Zustand der Bremsbeläge des Schienenfahrzeugs, welche noch nicht die Verschleißgrenze erreicht haben, geprüft und auch das Verschleißmaß der Bremsscheiben bzw. der Reibpartner der Bremsbeläge ermittelt werden. Ein wesentlicher Vorteil einer solchen Einrichtung liegt darin, dass die ansonsten notwendige zyklische Belagverschleißprüfung im Rahmen der Fahrzeugwartung aus dem Wartungsplan gestrichen und durch eine bedarfsorientierte Wartung ersetzt werden kann.

Der Nutzen einer Belagverschleißanzeige bei Erreichen der Belagverschleißgrenze wird anhand des folgenden Beispiels deutlich. Wenn etwa von einem Schienennetzbetreiber 100 Schienenfahrzeuge eingesetzt werden, mit 16 Bremsbelägen je Schienenfahrzeug und einer Prüfungsdauer von 1 Minute je Belag bei einem Prüfungsintervall von 14 Tagen und einer 30-jährigen Nutzungsdauer der Schienenfahrzeuge, so ergibt sich ein Prüfungsaufwand von insgesamt 20800 Stunden.

Bekannt ist beispielsweise aus der DE 100 29 238 A1 zur Sensierung des Verschleißzustandes der Bremsen, insbesondere des maximal zulässigen Verschleißes der Bremsbeläge von Scheibenbremsen, einen im Bremsbelag integrierten, elektrisch leitenden Verschleißsensor vorzusehen. Bei einem definierten kritischen Verschleißmaß des Bremsbelags kommt es zu einem Freilegen des Verschleißsensors, wobei je nach konstruktiver Ausführungsform eine elektrisch leitende Kontaktstelle mit der Bremsscheibe in Berührung kommt, wodurch ein elektrischer Kurzschluss hervorgerufen oder eine elektrische Kontaktdrahtschleife unterbrochen wird, d.h. es erfolgt eine Unterbrechung eines von außen aufgeprägten elektrischen Stromflusses. Die jeweilige Änderung des elektrischen Zustands kann über eine geeignete Auswerte- und Anzeigeeinheit dem Fahrer bzw. dem Wartungspersonal mitgeteilt werden.

Bei einem elektrischen Schienenfahrzeug erfolgt die Spannungsversorgung aus der Fahrdrahtspannung in der Regel über einen Pantographen. Für die erforderliche Erdung des Stromkreises wird die Schiene herangezogen. Die Verbindung mit der Schiene wird dabei gezielt über das Drehgestell und Erdungskontakte hergestellt. Die elektrisch leitfähige Bremsscheibe ist mit diesem Potential, das aufgrund der vor allem durch die Antriebssteuerung hervorgerufenen Schaltvorgänge in starkem Maße gestört ist, verbunden. Gerade wegen dieser Störungen ist das gesamte elektrische System von Schienenfahrzeugen auf ein eigenes ungestörtes Potential gelegt. Die Verbindung des gestörten Erdungspotentials mit dem ungestörten Wagenkastenpotential der Fahrzeugelektronik ist daher zu vermeiden.

Bei der Durchtrennung der elektrischen Kontaktdrahtschleife bei einer oben beschriebenen Verschleißanzeigeeinrichtung des Stands der Technik im Falle des Erreichens des maximal zulässigen Verschleißmaßes wird jedoch ein elektrischer Kontakt zwischen der Kontaktdrahtschleife und der Bremsscheibe hergestellt, so dass die Kontaktdrahtschleife und damit auch das Potential der Auswerteelektronik mit dem gestörten Erdungspotential unerwünscht verbunden wird.

Die gattungsgemäße DE 103 01 734 A1 schlägt zur Lösung des Problems vor, einen der Kontaktdrahtschleife zugeordneten Stromkreis und einen der Auswerteeinheit zugeordneten Stromkreis galvanisch zu trennen, aber magnetisch zu koppeln, beispielsweise über einen Transformator. Jedoch ist es bei einer Vielzahl von Bremsbelägen wie beispielsweise in einem Schienenfahrzeugzug von besonderem Interesse, herauszufinden, welcher Bremsbelag gerade die Verschleißgrenze erreicht hat, um eine aufwändige Überprüfung sämtlicher Bremsbeläge zu vermeiden.

Gemäß JP 10 009310 A wird bei einem Personenkraftwagen je Radbremse eine Detektionseinrichtung mit einer Kontaktdrahtschleife vorgesehen, wobei die Kontaktdrahtschleife nicht innerhalb des Bremsbelags verläuft, sondern in einem hiervor separaten Körper. Weiterhin ist in jeder Kontaktdrahtschleife, welche gegen das Fahrzeugchassis geerdet ist, ein Widerstand angeordnet, wobei für jede Kontaktdrahtschleife in jeweils anderer Widerstandswert vorgesehen ist, um jeder durch Verschleiß der Reibungspartner durchtrennten Kontaktschleife anhand der dann unterschiedlichen elektrischen Signale ein bestimmte Radbremse zuordnen zu können. Für einen Schienenfahrzeugzug mit einer Vielzahl von Reibungsbremsen ist diese Vorgehensweise jedoch sehr aufwändig.

Die Aufgabe der vorliegenden Erfindung besteht darin, eine Einrichtung zur Detektion eines maximal zulässigen Verschleißzustands von Bremsbelägen in Reibungsbremsen eines Schienenfahrzeugs derart weiterzubilden, dass auf einfache Weise festgestellt werden kann, welcher oder welche Bremsbeläge gerade die Verschleißgrenze erreicht haben.

Diese Aufgabe wird durch die Merkmale von Anspruch 1 gelöst.

### Offenbarung der Erfindung

Gemäß Anspruch 1 sind ein der Kontaktdrahtschleife zugeordneter Stromkreis und ein der Auswerteeinheit zugeordneter Stromkreis galvanisch getrennt, aber magnetisch gekoppelt sind. Dadurch wird eine Potentialtrennung zwischen der Kontaktdrahtschleife und der Auswerteeinheit erreicht, weshalb die Auswerteeinheit von dem in der Regel gestörten Potential der Bremsscheibe bzw. des betreffenden Reibpartners entkoppelt ist.

Hierbei ist der der Auswerteeinheit zugeordnete Stromkreis mit einer primärseitigen icklung eines Transformators und der der Kontaktdrahtschleife zugeordnete Stromkreis mit einer sekundärseitigen Wicklung des Transformators elektrisch leitend verbunden.

Die Erfindung basiert auf dem Gedanken, dass sekundärseitig wenigstens ein Widerstand in Reihe zu der Kontaktdrahtschleife geschaltet ist, wobei dann für eine Detektion des Verschleißzustands mehrerer Bremsbeläge die den jeweiligen Kontaktdrahtschleifen zugeordneten Widerstände unterschiedliche Widerstandswerte aufweisen. Zusätzlich wird dann die Auswerteeinheit derart ausgebildet, dass sie die von einer Trennung einer Kontaktdrahtschleife herrührende Änderung des elektrischen Zustands anhand des Widerstandswerts des jeweiligen sekundärseitigen Widerstands einem bestimmten Bremsbelag zuordnet und dass für die Reibungsbremsen wenigstens eines Drehgestells des Schienenfahrzeugs eine eigene Auswerteeinheit vorgesehen ist, welche den Verschleißzustand der Bremsbeläge der Reibungsbremsen überwacht.

In der Regel sind in einem Drehgestell eines Schienenfahrzeugs vier Reibungsbremsen z.B. als Scheibenbremsen vorhanden, deren in den Bremsbelägen integrierte Kontaktdrahtschleifen dann von einer gemeinsamen Auswerteeinheit überwacht werden. Auf diese Weise ist eine einfache Detektion des oder der gerade verschlissenen Bremsbeläge dieses Drehgestells möglich.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt sind wenigstens die Auswerteeinheit, die Widerstände und der Transformator in einer baulichen Einheit oder in einem Modul zusammengefasst, wobei die Kontaktdrahtschleifen mittels lösbarer Steck- oder Schraubverbindungen mit der baulichen Einheit oder dem Modul verbindbar sind. Dadurch ist zum einen eine kompakte, modulare Bauform und andererseits eine einfache Auswechselbarkeit der Bremsbeläge zusammen mit den darin integrierten Kontaktschleifen möglich.

Genaueres wird im Rahmen der folgenden Beschreibung eines Ausführungsbeispiels deutlich.

### Zeichnung

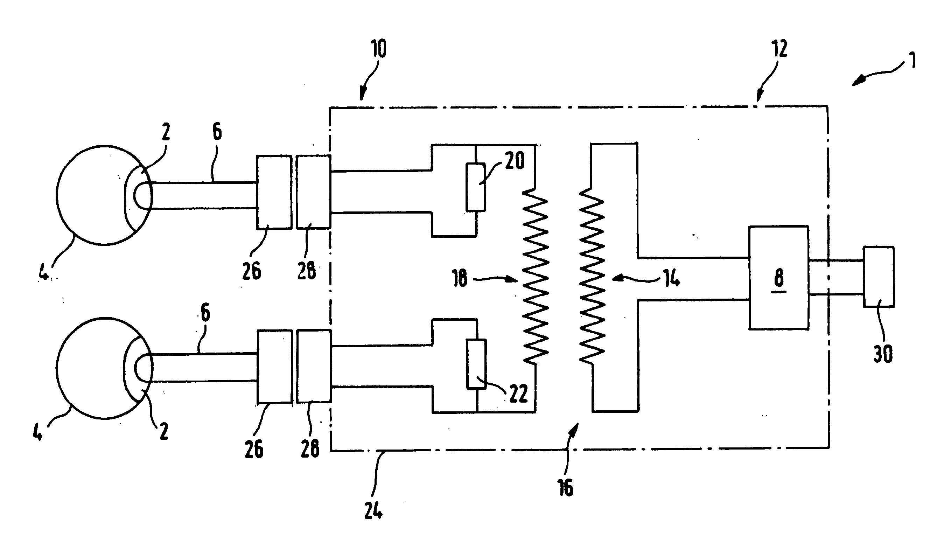

Ein Ausführungsbeispiel der Erfindung ist in der Zeichnung dargestellt und in der nachfolgenden Beschreibung näher erläutert. In der Zeichnung zeigt die einzige Figur einen schematischen Schaltplan einer Einrichtung zur Detektion eines maximal zulässigen Verschleißzustands von Bremsbelägen in Reibbremsen eines Schienenfahrzeugs gemäß einer bevorzugten Ausführungsform der Erfindung.

### Beschreibung des Ausführungsbeispiels

Die in der Figur gezeigte bevorzugte Ausführungsform einer Einrichtung 1 zur Detektion eines maximal zulässigen Verschleißzustands von Bremsbelägen 2 in Reibbremsen eines Schienenfahrzeugs dient bevorzugt zur Detektion des maximal zulässigen Verschleißzustandes der Bremsscheiben 4 zugeordneten Bremsbeläge 2 in Bremsbelag-Bremsscheiben-Reibungsbremsen eines Drehgestells des Schienenfahrzeugs.

Von den üblicherweise vier Scheibenbremsen je Drehgestell sind in der Figur der Übersichtlichkeit halber lediglich zwei Scheibenbremsen stellvertretend dargestellt. Die Anwendung der Erfindung ist allerdings nicht auf Bremsbelag-Bremsscheiben-Kombinationen beschränkt. Sie kann vielmehr bei allen Reibungsbremsen Anwendung finden, bei welchen Reibkörper in Reibpaarungen einem Verschleiß unterworfen sind, welcher zu einer Reduzierung des jeweils vorhandenen Verschleißvolumens führt, bei welchem aber ein Restvolumen erhalten bleiben muss.

Je Scheibenbremse sind beispielsweise wenigstens zwei Bremsbeläge 2 vorgesehen. Dabei ist in wenigstens einen Bremsbelag 2 wenigstens eine Kontaktdrahtschleife 6 mindestens teilweise integriert, wobei bei Erreichen des maximal zulässigen Verschleißmaßes des betreffenden Bremsbelags 2 wenigstens ein Teil der betreffenden elektrischen Kontaktdrahtschleife 6 freigelegt und unter elektrisch leitendem Kontakt mit der Bremsscheibe 4 unterbrochen wird, wobei die hierdurch hervorgerufene Änderung des elektrischen Zustands der Kontaktdrahtschleife 6 von einer elektronischen Auswerteeinheit 8 auswertbar ist.

Dabei sind ein der Kontaktdrahtschleife 6 zugeordneter Stromkreis 10 und ein der Auswerteeinheit 8 zugeordneter Stromkreis 12 galvanisch getrennt, aber magnetisch gekoppelt. Bevorzugt ist der der Auswerteeinheit 8 zugeordnete Stromkreis 12 mit einer primärseitigen Wicklung 14 eines Transformators 16 und die den Kontaktdrahtschleifen 6 zugeordneten Stromkreise 10 mit einer sekundärseitigen Wicklung 18 des Transformators 16 elektrisch leitend verbunden.

Sekundärseitig ist wenigstens ein Widerstand 20, 22 in Reihe zu der betreffenden Kontaktdrahtschleife 6 geschaltet. Besonders bevorzugt sind wenigstens die Auswerteeinheit 8, die Widerstände 20, 22 und der Transformator 16 in einer baulichen Einheit oder in einem Modul zusammengefasst. Diese Zusammenfassung erfolgt dabei durch die räumlich nahe Anordnung der einzelnen Elemente. Die einzelnen Elemente können dabei
a) durch Aneinanderflanschen ihrer Gehäuse, oder
b) durch Integration wenigstens einer Mehrzahl von Komponenten in einem gemeinsamen Gehäuse 24, oder
c) durch Integration von Komponenten in einem gemeinsamen Gehäuse und Anflanschen der restlichen Komponenten am gemeinsamen Gehäuse miteinander zur baulichen Einheit zusammengefasst sein.

Im vorliegenden Fall sind wenigstens die Auswerteeinheit 8, die Widerstände 20, 22 und der Transformator 16 in einem gemeinsamen, in der Figur durch eine strichpunktierte Linie angedeuteten Gehäuse 24 untergebracht.

Die Kontaktdrahtschleifen 6 sind bevorzugt mittels lösbarer Steck- oder Schraubverbindungen mit der baulichen Einheit oder dem Modul verbunden. Beispielsweise sind die Kontaktdrahtschleifen 6 an ihren von den Bremsbelägen 2 weg weisenden Enden mit Steckern 26 (ausgeführt in der Schutzklasse IP67 oder IP68) versehen, welche in am Gehäuse 24 des Moduls angeordneten Buchsen 28 einsteckbar ausgebildet sind.

Als Auswerteeinheit 8 wird bevorzugt ein Mainboard eingesetzt, welches zum einen über einen PWM-Ausgang, der hier nicht dargestellt ist, die Spannungsversorgung des Transformators 16 sicherstellt. Zum andern erfasst das Mainboard 8 über einen hier nicht separat gezeigten Analogsensoreingang den Stromfluss der Spannungsversorgung.

Wird nun auf der Sekundärseite des Transformators 16 der Stromfluss durch die Durchtrennung einer der Kontaktdrahtschleifen 6 aufgrund des Erreichens der Verschleißgrenze des betreffenden Bremsbelags 2 verändert, so wird auf der Primärseite der Stromfluss ebenfalls verändert und kann durch das Mainboard 8 erfasst werden.

Für eine Detektion des Verschleißzustands mehrerer Bremsbeläge 2 weisen die den jeweiligen Kontaktdrahtschleifen 6 zugeordneten Widerstände 20, 22 unterschiedliche Widerstandswerte auf. Die Auswerteeinheit 8 ist dabei derart ausgebildet, dass sie die von einer Trennung einer Kontaktdrahtschleife 6 herrührende Änderung des elektrischen Zustands anhand des Widerstandswerts des jeweiligen sekundärseitigen Widerstands 20 oder 22 einem bestimmten Bremsbelag 2 zuordnet. Hieraus ist daher eine Information darüber erhältlich, welcher der Bremsbeläge 2 sich an seiner Verschleißgrenze befindet.

Die Unterbrechung der elektrischen Kontaktdrahtschleife 6 wird durch die nachgeschaltete Auswerteeinheit 8 detektiert und über diskrete Signalleitungen bzw. über einen Datenbus an eine Zentraldiagnose 30 des Schienenfahrzeugs weitergeleitet und über geeignete Anzeigemittel dem Fahrer des Schienenfahrzeugs angezeigt bzw. zunächst telemetrisch an eine vom Schienenfahrzeug getrennte Station übermittelt und dort angezeigt. Dem Betreiber erlaubt diese rechtzeitige Signalisierung des Erreichens der Verschleißgrenze geeignete Maßnahmen einzuleiten, wie etwa das Schienenfahrzeug für einen Bremsbelagwechsel in der Werkstatt anzumelden.

### Bezugszahlenliste

- 1: Einrichtung
- 2: Bremsbeläge
- 4: Bremsscheiben
- 6: Kontaktdrahtschleife
- 8: Auswerteeinheit
- 10: Stromkreis
- 12: Stromkreis
- 14: Primärwicklung
- 16: Transformator
- 18: Sekundärwicklung
- 20: Widerstand
- 22: Widerstand
- 24: Gehäuse
- 26: Stecker
- 28: Buchse
- 30: Zentraldiagnose

## Patentansprüche

1. Einrichtung (1) zur Detektion eines maximal zulässigen Verschleißzustands von Bremsbelägen (2) in Reibungsbremsen wenigstens eines Drehgestells eines Schienenfahrzeugs, mit wenigstens einem in einem Bremsbelag (2) integrierten, eine elektrische Kontaktdrahtschleife (6) umfassenden Verschleißsensor, bei welchem bei Erreichen des maximal zulässigen Verschleißmaßes des Bremsbelags (2) wenigstens ein Teil der elektrischen Kontaktdrahtschleife (6) freigelegt und unter elektrisch leitendem Kontakt mit dem Reibpartner (4) unterbrochen wird, wobei die hierdurch hervorgerufene Änderung des elektrischen Zustands der Kontaktdrahtschleife (6) von einer Auswerteeinheit (8) auswertbar ist, wobei ein der Kontaktdrahtschleife (6) zugeordneter Stromkreis (10) und ein der Auswerteeinheit (8) zugeordneter Stromkreis (12) galvanisch getrennt, aber magnetisch gekoppelt sind, **dadurch gekennzeichnet, dass** der der Auswerteeinheit (8) zugeordnete Stromkreis (12) mit einer primärseitigen Wicklung (14) eines Transformators (16) und der der Kontaktdrahtschleife (6) zugeordnete Stromkreis (10) mit einer sekundärseitigen Wicklung (18) des Transformators (16) elektrisch leitend verbunden ist und dass sekundärseitig wenigstens ein Widerstand (20, 22) in Reihe zu der Kontaktdrahtschleife (6) geschaltet ist und dass mehrere Bremsbeläge (2) mit Kontaktschleifen (6) versehen sind und dass für eine Detektion des Verschleißzustands der mehreren Bremsbeläge (2) die den jeweiligen Kontaktdrahtschleifen (6) zugeordneten Widerstände (20, 22) unterschiedliche Widerstandswerte aufweisen, wobei die Auswerteeinheit (8) derart ausgebildet ist, dass sie die von einer Trennung einer Kontaktdrahtschleife (6) herrührende Änderung des elektrischen Zustands anhand des Widerstandswerts des jeweiligen sekundärseitigen Widerstands (20, 22) einem bestimmten Bremsbelag (6) zuordnet und dass für die Reibungsbremsen des wenigstens einen Drehgestells des Schienenfahrzeugs eine eigene Auswerteeinheit (8) vorgesehen ist, welche den Verschleißzustand der Bremsbeläge (2) der Reibungsbremsen überwacht.

2. Einrichtung nach Anspruch 1, **dadurch gekennzeichnet, dass** wenigstens die Auswerteeinheit (8), die Widerstände (20, 22) und der Transformator (16) in einer baulichen Einheit oder in einem Modul zusammengefasst sind.

3. Einrichtung nach Anspruch 2, **dadurch gekennzeichnet, dass** die Kontaktdrahtschleifen (6) mittels lösbarer Steck- oder Schraubverbindungen (26, 28) mit der baulichen Einheit oder dem Modul verbindbar sind.

## Claims

1. Device (1) for the detection of a maximum permissible wear state of brake pads (2) in friction brakes of at least one bogie of a rail vehicle, comprising at least one wear sensor integrated into a brake pad (2) and including an electric contact wire loop (6), wherein, on reaching the maximum permissible degree of wear of the brake pad (2), at least a part of the electric contact wire loop (6) is exposed and broken under electrically conductive contact with the friction partner (4), wherein the change of the electric state of the contact wire loop (6) caused thereby can be evaluated by an evaluation unit (8), wherein a circuit (10) assigned to the contact wire loop (6) and a circuit (12) assigned to the evaluation unit (8) are galvanically isolated but magnetically coupled, **characterised in that** the circuit (12) assigned to the evaluation unit (8) is electrically connected to a primary winding (14) of a transformer (16) and the circuit (10) assigned to the contact wire loop (6) is electrically connected to a secondary winding (18) of the transformer (16), **in that** on the secondary side at least one resistor (20, 22) is connected in series with the contact wire loop (6), **in that** several brake pads (2) are provided with contact wire loops (6), and **in that**, for a detection of the wear state of the several brake pads (2), the resistors (20, 22) assigned to the respective contact wire loops (6) have different resistance values, wherein the evaluation unit (8) is designed such that it assigns the change of the electric state caused by an interruption of a contact wire loop (6) to a specific brake pad (2) using the resistance value of the respective secondary-side resistor (20, 22), and **in that** a separate evaluation unit (8) which monitors the wear state of the brake pads (2) of the friction brakes is provided for the friction brakes of the at least one bogie of the rail vehicle.

2. Device according to claim 1, **characterised in that** at least the evaluation unit (8), the resistors (20, 22) and the transformer (16) are combined in a structural unit or in a module.

3. Device according to claim 2, **characterised in that** the contact wire loops (6) can be connected to the structural unit or to the module by means of releasable plug-and-socket or screw connectors (26, 28).

## Revendications

1. Dispositif de détection d'un état d'usure admissible au maximum de garnitures (2) de frein dans des freins à friction d'au moins un boggie d'un véhicule ferroviaire, comprenant au moins un capteur d'usure, qui est intégré dans une garniture (2) de frein, qui comprend une boucle (6) électrique à fil de contact et dans lequel, lorsque la valeur admissible au maximum de l'usure de la garniture (2) de frein est atteinte, au moins une partie de la boucle (6) électrique à fil de contact est mise à nu et est interrompue sous contact conducteur électriquement avec le partenaire (4) de friction, dans lequel la modification ainsi provoquée de l'état électrique de la boucle (6) à fil de contact peut être exploitée par une unité (8) d'exploitation, dans lequel un circuit (10) associé à la boucle (6) à fil de contact et un circuit (12) associé à l'unité (8) d'exploitation sont séparés galvaniquement, mais sont couplés magnétiquement, **caractérisé en ce que** le circuit (12) associé à l'unité (8) d'exploitation est relié d'une manière conductrice de l'électricité à un enroulement (14) du côté primaire d'un transformateur (16) et le circuit (10) associé à la boucle (6) à fil de contact est relié d'une manière conductrice de l'électricité à un enroulement (18) du côté secondaire du transformateur (16) et **en ce que**, du côté secondaire, au moins une résistance (20, 22) est montée en série avec la boucle (6) à fil de contact et **en ce que** plusieurs garnitures (12) de frein sont pourvues de boucles (16) de contact et **en ce que**, pour une détection de l'état d'usure des plusieurs garnitures (2) de frein, les résistances (20, 22) associées aux boucles (6) à fil de contact respectives ont des valeurs différentes de la résistance, l'unité (8) d'exploitation étant telle qu'elle associe à une garniture (6) de frein déterminée la variation, provenant d'une séparation d'une boucle (6) à fil de contact, de l'état électrique au moyen de la valeur de la résistance (20, 22) respective du côté secondaire et **en ce qu'**il est prévu, pour les freins à friction du au moins un boggie du véhicule ferroviaire, une unité (8) propre d'exploitation, qui contrôle l'état d'usure des garnitures (2) des freins à friction.

2. Dispositif suivant la revendication 1, **caractérisé en ce qu'**au moins l'unité (8) d'exploitation et les résistances (20, 22) et le transformateur (16) sont rassemblés en une unité de construction ou en un module.

3. Dispositif suivant la revendication 2, **caractérisé en ce que** les boucles (6) à fil de contact peuvent être reliées à l'unité de construction ou au module au moyen de liaisons (26, 28) amovibles par enfichage ou par vis.
